# EUROPEAN PATENT SPECIFICATION

(11) **EP 2 878 513 B1**
(45) Date of publication and mention of the grant of the patent: **31.05.2017**
(21) Application number: 14195108.7
(22) Date of filing: 27.11.2014
(51) Int. Cl.: B62B 9/10

(54) **Backrest adjustor and baby carriage including such a backrest adjustor**
Rückenlehnenversteller und Kinderwagen mit einem derartigen Rückenlehnenversteller
Réglage de dossier et poussette avec un tel réglage de dossier

(30) Priority: 28.11.2013 CN 201320772970 U
(43) Date of publication of application: 03.06.2015
(73) Proprietor: O'SK Baby & Children Products (Fujian) Co., Ltd., Zhang Zhou City, Fujian (CN)
(72) Inventor: Yao, Fulai, Zhang Zhou City, Fujian Province (CN); Lei, Dexiang, Zhang Zhou City, Fujian Province (CN); Huang, Jinhai, Zhang Zhou City, Fujian Province (CN)
(74) Representative: Hellmich, Wolfgang

(56) References cited:
- GB-A- 2 178 306
- JP-A- 2003 095 113
- US-B2- 7 278 652

## Description

### FIELD OF THE INVENTION

The present invention relates to a backrest adjustor, a backrest adjustor for a baby carriage, and further to a baby carriage, belonging to the technical field of baby carriages. Each of the documents GB 2 178 306 A and US 7,278,652 B2 shows a backrest adjustor according to the preamble of claim 1.

### BACKGROUND OF THE INVENTION

In the prior art, a backrest for a conventional baby carriage is provided with a ribbon having an adjustable buckle provided thereon. The backrest is allowed to ascend or descend by adjusting the length of the ribbon via the adjustable buckle, and the position of the backrest may be adjusted by the ribbon and the adjustable buckle. However, such an adjustment device requires both hands during the whole adjustment, and is time-consuming and quite inconvenient in operation especially for users carrying with children because they have to do this while taking care of children.

### SUMMARY OF THE INVENTION

The technical problem to be solved in the present invention is to provide a backrest adjustor which is simple in structure and convenient and easy in adjustment.

The present invention further relates to a baby carriage.

The present invention as defined in claim 1 may employ the following technical solutions.

A backrest adjustor is provided, including a shell, a rotarygear located inside the shell, a winding wheel which is driven by the gear and located inside the shell, a knob for driving the gear to rotate, and a button capable of controlling the gear to rotate, moving and being reset by a reset component, a rotating portion of the knob being exposed outside the shell; the backrest adjustor further includes a ribbon, the middle segment of which is wound on the winding wheel while two ends of which used for connecting a frame of a baby carriage extend from the shell and are then wound around the outer face of a backrest; or, the backrest adjustor further includes two ribbons, one ends of which are separately wound on the winding wheel while the other ends of which used for connecting frame of the baby carriage extend from the shell separately and are then wound around the outer face of the backrest.

To solve the problem, the present invention may further employ the following improvement measures.

The winding wheel, the gear and the knob are coaxial and formed integrally.

The winding wheel is located on the inner side of the gear.

The winding wheel is located between the gear and the knob.

The reset component is a torsion spring which is in contact with the button, a portion of the button can extend into a tooth slot, and the button is provided with a member to be pressed which is exposed outside the shell.

The button is mounted on a rotating column disposed inside the shell.

The shell includes an upper cover and a lower cover, which are connected to each other to form the shell.

The position relationship between the gear and the button contributes to a ratchet structure.

The technical solution of the baby carriage is as follows:
A baby carriage is provided, including a frame having a backrest provided thereon, and further including the backrest adjustor described above, the backrest adjustor being located on an outer side of the backrest, corresponding ends of a ribbon in the backrest adjustor being connected to the frame.

The above technical solutions have the following technical effects:
1. The backrest adjustor provided by the present invention is simple in structure, convenient and easy in adjustment and capable of allowing adjustment by a single hand, and the backrest adjustor is suitable for users carrying with children.
2. With the backrest adjustor, the baby carriage provided by the present invention is simple in structure, convenient and easy in adjustment and capable of allowing adjustment by a single hand, and the baby carriage is suitable for users carrying with children. As the other portion of the ribbon is hidden inside the adjustor, the adjustor has a nice appearance.

### BRIEF DESCRIPTION OF THE DRAWINGS

Fig. 1 is a front view of the present invention;
Fig. 2 is an internal structure diagram of the present invention;
Fig. 3 is an exploded view of the present invention; and
Fig. 4 is a schematic diagram of a baby carriage according to the present invention.

### DETAILED DESCRIPTION OF THE PREFERRED EMBODIMENTS

The present invention will be specifically described with reference to specific embodiments.

### Embodiment 1:

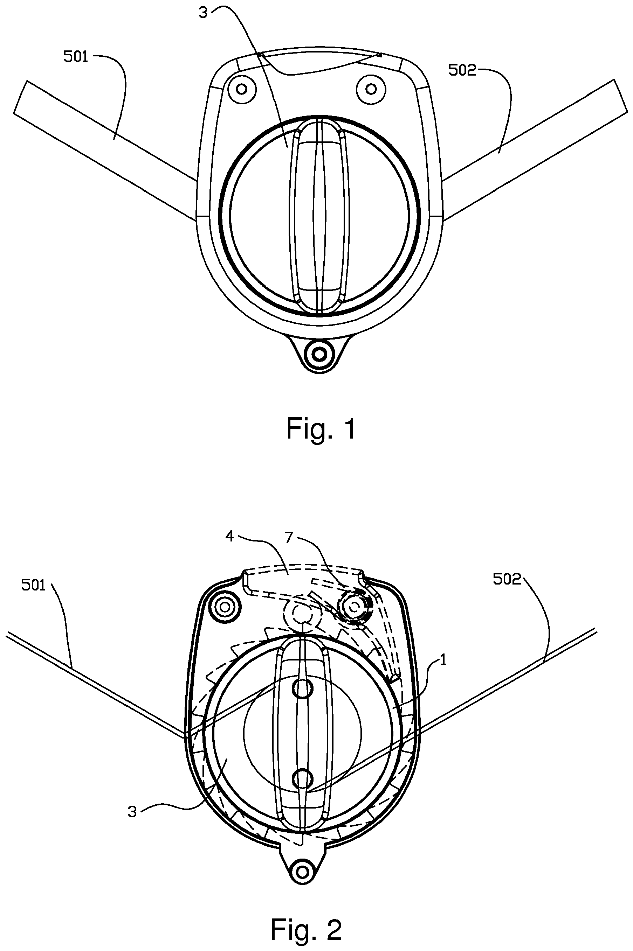

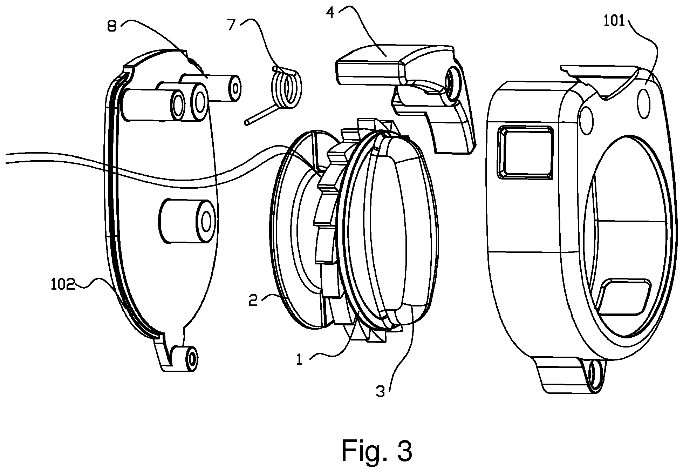

As shown in Fig. 1 to Fig. 4, a backrest adjustor is provided, including a shell, a rotarygear 1 located inside the shell, a winding wheel 2 which is driven by the gear 1 and located inside the shell, a knob 3 for driving the gear 1 to rotate, and a button 4 capable of controlling the gear 1 to rotate, moving and being reset by a reset component. A rotating portion of the knob 3 is exposed outside the shell. The shell includes an upper cover 101 and a lower cover 102, which are connected to each other to form the shell. Of course, the shell may be formed from multiple connected portions.

The backrest adjustor further includes two ribbons 501 and 502. One ends of the two ribbons are separately wound on the winding wheel while the other ends thereof used for connecting a frame 6 of a baby carriage extend from the shell and are then wound around the outer face of a backrest 5.

The winding wheel 2, the gear 1 and the knob 3 are coaxial and formed integrally, so that the backrest adjustor is compact in structure and space-saving. The winding wheel 2 is located on the inner side of the gear 1.

The reset component is a torsion spring 7 which is in contact with the button 4. A portion of the button 4 may extend into a tooth slot of the gear 1. The button 4 is provided with a member to be pressed which is exposed outside the shell. The button 4 is mounted on a rotating column 8 disposed inside the shell. Of course, the button 4 may be mounted by other conventional methods.

The position relationship between the gear and the button contributes to a ratchet structure.

The working principle will be described as below. First, the gear 1 is rotated and the ribbons are wound on the winding wheel, so that the ascending of the backrest is realized by adjusting the length of the ribbons. The button is blocked on the gear under the action of the torsion spring, so that the reverse rotation of the gear is avoided. Therefore, the backrest adjustor is simple in structure and convenient and easy in adjustment, and may be adjusted by a single hand. Second, release operation: the button is pressed down by a hand and then the button is disengaged from the gear, so that the gear may rotate reversely and the ribbons may be pulled out, realizing the lying of the backrest 5.

As another embodiment, the characteristic lies in that: in this embodiment, one ribbon is utilized, the middle segment of which is wound on the winding wheel while two ends of which used for connecting a frame of a baby carriage extend from the shell and are then wound around the outer face of a backrest.

As another embodiment, the characteristic lies in that: the winding wheel is located between the gear and the knob. A simple structure is realized.

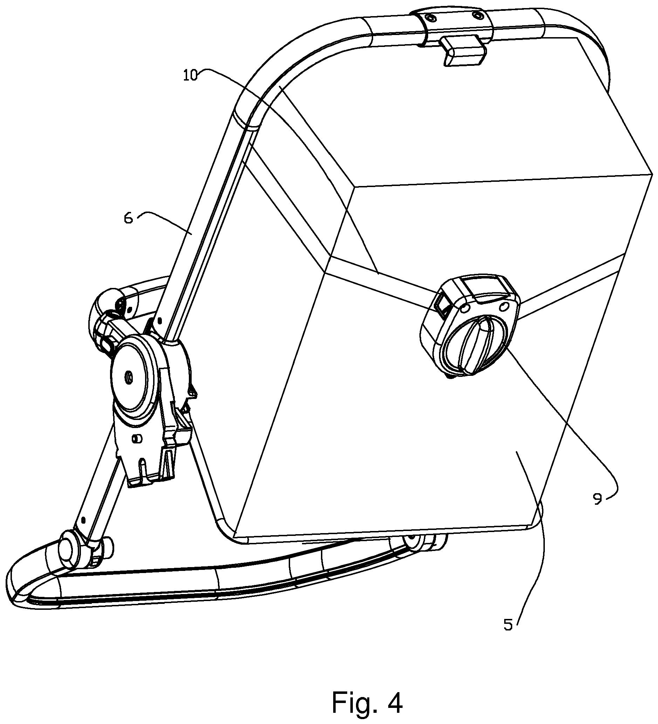

As another embodiment, as shown in Fig. 4, a baby carriage is provided, including a frame 6 having a backrest 5 provided thereon, and further including the backrest adjustor described above. The backrest adjustor is located on the outer side of the backrest, and a ribbon 10 of the backrest adjustor is connected to frame.

The forgoing description merely shows the specific embodiments of the present invention, and the protection scope of the present invention is not limited thereto. Any variation or displacement readily thought by those of ordinary skill in the art upon the disclosure of the present invention shall fall into the protection scope of the present invention. Therefore, the protection scope of the present invention shall be subject to the appended claims.

## Claims

1. A backrest adjustor, comprising a shell, a rotary gear (1) located inside the shell, a winding wheel (2) which is driven by the gear (1) and located inside the shell, and a button (4) capable of controlling the gear (1) to rotate, moving and being reset by a reset component,; the backrest adjustor further comprising a ribbon (10), the middle segment of the ribbon (10) being wound on the winding wheel (2), two ends of the ribbon (10) suitable for connecting to a frame (6) of a baby carriage are extending from the shell and being adapted to be wound around the outer face of a backrest (5); or, the backrest adjustor further comprising two ribbons (501, 502), one end of each being separately wound on the winding wheel (2) and the other end of each suitable for connecting to a frame (6) of the baby carriage extending from the shell separately and being adapted to be wound around the outer face of the backrest (5),
**characterized in** comprising a knob (3) for driving the gear (1) to rotate, a rotating portion of the knob (3) being exposed outside the shell.

2. The backrest adjustor according to claim 1, wherein the winding wheel (2), the gear (1) and the knob (3) are coaxial and formed integrally.

3. The backrest adjustor according to claim 2, wherein the winding wheel (2) is located on the inner side of the gear (1).

4. The backrest adjustor according to claim 2, wherein the winding wheel (2) is located between the gear (1) and the knob (3).

5. The backrest adjustor according to one of claims 1 to 4, wherein the reset component is a torsion spring (7) which is in contact with the button (4), a portion of the button (4) can extend into a tooth slot of the gear (1), and the button (4) is provided with a member to be pressed which is exposed outside the shell.

6. The backrest adjustor according to claim 5, wherein the button (4) is mounted on a rotating column (8) disposed inside the shell.

7. The backrest adjustor according to one of claims 1 to 6, wherein the shell comprises an upper cover (101) and a lower cover (102), which are connected to each other to form the shell.

8. The backrest adjustor according to one of claims 1 to 7, wherein the position relationship between the gear (1) and the button (4) contributes to a ratchet structure.

9. A baby carriage, comprising a frame (6) having a backrest (5) provided thereon, and further comprising the backrest adjustor according to any one of claims 1-7, the backrest adjustor being located on an outer side of the backrest (5), corresponding ends of a ribbon (10) in the backrest adjustor being connected to the frame (6).

## Patentansprüche

1. Ein Rückenlehnenversteller mit einer Schale, einem drehbaren Zahnrad (1), das sich innerhalb der Schale befindet, einem Spannrad (2), das durch das Zahnrad (1) angetrieben wird und sich innerhalb der Schale befindet und einem Knopf (4), der geeignet ist, das Zahnrad (1) zu steuern, sich zu drehen und der geeignet ist, sich zu bewegen und durch ein Rücksetzteil zurückgesetzt zu werden, wobei der Rückenlehnenversteller ferner ein Band (10) umfasst, wobei der Mittelteil des Bandes (10) um das Spannrad (2) gewickelt ist, wobei zwei Enden des Bandes (10), die geeignet sind, mit einem Rahmen (6) einer Babytrage verbunden zu werden, aus der Schale heraushängen und angepasst sind, um um die Außenseite einer Rückenlehne (5) gewickelt zu werden; oder wobei der Rückenlehnenversteller ferner zwei Bänder (501, 502) umfasst, wobei ein Ende jedes Bandes (501, 502) separat auf das Spannrad (2) gewickelt ist und das andere Ende jedes Bandes (501, 502), das passend ist, um mit einem Rahmen (6) der Babytrage verbunden zu werden, separat aus der Schale heraushängt und angepasst ist, um um die Außenseite der Rückenlehne (5) gewickelt zu werden,
**dadurch gekennzeichnet, dass** der Rückenlehnenversteller einen Drehknopf (3) zum Antreiben des Zahnrads (1) zum Rotieren umfasst, wobei ein Drehteil des Drehknopfs (3) außerhalb der Schale exponiert ist.

2. Der Rückenlehnenversteller gemäß Anspruch 1, wobei das Spannrad (2), das Zahnrad (1) und der Drehknopf (3) koaxial und einstückig ausgebildet sind.

3. Der Rückenlehnenversteller gemäß Anspruch 2, wobei sich das Spannrad (2) auf der Innenseite des Zahnrads (1) befindet.

4. Der Rückenlehnenversteller gemäß Anspruch 2, wobei sich das Spannrad (2) zwischen dem Zahnrad (1) und dem Drehknopf (3) befindet.

5. Der Rückenlehnenversteller gemäß einem der Ansprüche 1 bis 4, wobei das Rücksetzteil eine Drehfeder (7) ist, die in Kontakt mit dem Knopf (4) steht, wobei ein Teil des Knopfs (4) in einen Zahnschlitz des Zahnrads (1) hineinragen kann, und wobei der Knopf (4) mit einem Teil zum Drücken ausgestattet ist, das außerhalb der Schale exponiert ist.

6. Der Rückenlehnenversteller gemäß Anspruch 5, wobei der Knopf (4) auf einer Rotationssäule (8), die innerhalb der Schale eingerichtet ist, montiert ist.

7. Der Rückenlehnenversteller gemäß einem der Ansprüche 1 bis 6, wobei die Schale eine obere Abdeckung (101) und eine untere Abdeckung (102) umfasst, die miteinander verbunden sind, um die Schale zu bilden.

8. Der Rückenlehnenversteller gemäß einem der Ansprüche 1 bis 7, wobei das Positionsbeziehung zwischen dem Zahnrad (1) und dem Knopf (4) zu einer Ratschenstruktur beiträgt.

9. Eine Babytrage mit einem Rahmen (6), der eine Rückenlehne (5) aufweist, die sich hierauf befindet und ferner den Rückenlehnenversteller gemäß einem der Ansprüche 1 bis 7, umfasst, wobei sich der Rückenlehnenversteller auf einer Außenseite der Rückenlehne (5) befindet, wobei entsprechende Enden eines Bands (10) im Rückenlehnenversteller mit dem Rahmen (6) verbunden sind.

## Revendications

1. Réglage de dossier, comprenant une coque, un engrenage rotatif (1) positionné à l'intérieur de la coque, un volant d'enroulement (2) entraîné par l'engrenage (1) et positionné à l'intérieur de la coque et un bouton (4) capable de commander l'engrenage (1) pour le faire tourner, celui-ci se déplaçant et étant réinitialisé par un élément de réinitialisation, le réglage de dossier comprenant en outre un ruban (10), le segment central du ruban (10) étant enroulé sur le volant d'enroulement (2), deux extrémités du ruban (10) étant adaptées pour être reliées au châssis (6) d'une poussette s'étendant hors de la coque et étant conçues pour être ensuite enroulées autour de la face extérieure d'un dossier (5); ou le réglage de dossier comprenant en outre deux rubans (501, 502), dont une extrémité de chacun est enroulée séparément sur le volant d'enroulement (2) et l'autre extrémité de chacun est adaptée pour être reliée séparément à un châssis (6) de la poussette s'étendant hors de la coque et étant conçue pour être ensuite enroulée autour de la face extérieure du dossier (5),
**caractérisé en ce qu'**il comprend un bouton-poussoir (3) pour entraîner l'engrenage (1) en rotation, une partie tournante du bouton-poussoir (3) étant exposée à l'extérieur de la coque.

2. Réglage de dossier selon la revendication 1, dans lequel le volant d'enroulement (2), l'engrenage (1) et le bouton-poussoir (3) sont coaxiaux et intégralement moulés.

3. Réglage de dossier selon la revendication 2, dans lequel le volant d'enroulement (2) est positionné sur la face intérieure de l'engrenage (1).

4. Réglage de dossier selon la revendication 2, dans lequel le volant d'enroulement (2) est positionné entre l'engrenage (1) et le bouton-poussoir (3).

5. Réglage de dossier selon l'une quelconque des revendications 1 à 4, dans lequel l'élément de réinitialisation est un ressort à torsion (7) en contact avec le bouton (4), une partie du bouton (4) pouvant s'étendre dans une fente dentée de l'engrenage (1) et le bouton (4) étant pourvu d'un élément pouvant être enfoncé et exposé à l'extérieur de la coque.

6. Réglage de dossier selon la revendication 5, dans lequel le bouton (4) est fixé sur une colonne (8) tournante disposée à l'intérieur de la coque.

7. Réglage de dossier selon l'une quelconque des revendications 1 à 6, dans lequel la coque comprend un cache supérieur (101) et un cache inférieur (102) reliés l'un à l'autre pour former la coque.

8. Réglage de dossier selon l'une quelconque des revendications 1 à 7, dans lequel la relation de position entre l'engrenage (1) et le bouton (4) contribue à une structure à rochet.

9. Poussette, comprenant un châssis (6) ayant un dossier (5) prévu dessus et comprenant en outre le réglage de dossier selon l'une quelconque des revendications 1 à 7, le réglage de dossier étant positionné sur une face extérieure du dossier (5), les extrémités correspondantes d'un ruban (10) prévu dans le réglage de dossier étant reliées au châssis (6).
